# EUROPÄISCHE PATENTSCHRIFT

(11) **EP 4 300 156 B1**
(45) Veröffentlichungstag und Bekanntmachung des Hinweises auf die Patenterteilung: **10.12.2025**
(21) Anmeldenummer: 23178901.7
(22) Anmeldetag: 13.06.2023
(51) Int. Cl.: G02B 7/00, G02B 7/02, G02B 7/182

(54) **JUSTIERVORRICHTUNG ZUR JUSTIERUNG OPTISCHER KOMPONENTEN EINES OPTISCHEN INSTRUMENTS SOWIE VORRICHTUNGSANORDNUNG**
ADJUSTMENT DEVICE FOR ADJUSTING OPTICAL COMPONENTS OF AN OPTICAL INSTRUMENT AND DEVICE ASSEMBLY
DISPOSITIF D'AJUSTEMENT POUR L'AJUSTEMENT DE COMPOSANTS OPTIQUES D'UN INSTRUMENT OPTIQUE ET ENSEMBLE DISPOSITIF

(30) Priorität: 23.06.2022 DE 102022115716
(43) Veröffentlichungstag der Anmeldung: 03.01.2024
(73) Patentinhaber: Karl Storz SE & Co. KG, 78532 Tuttlingen (DE)
(72) Erfinder: Diemer, Carolin, 78532 Tuttlingen (DE); Dressnandt, Magnus, 78532 Tuttlingen (DE); Forster, Jonas, 78532 Tuttlingen (DE); Gallace, Patricia, 78532 Tuttlingen (DE); Heni, Andreas, 78532 Tuttlingen (DE)

(56) Entgegenhaltungen:
- JP-A- 2022 121 864
- US-A- 4 859 847
- US-A1- 2011 185 831
- US-B2- 6 754 013

## Beschreibung

Die Erfindung betrifft eine Justiervorrichtung zur Justierung optischer Komponenten eines optischen Instruments, mit mindestens einer Justierschraube, über die die auf einem Träger angeordnete optische Komponente relativ zu einem anderen Bauteil des optischen Instruments in einer exakten Position fixierbar ist. Weiterhin betrifft die Erfindung eine Vorrichtungsanordnung zur Justierung optischer Komponenten mit einer mindestens eine Justierschraube aufweisenden Justiervorrichtung.

Die optischen Komponenten, wie beispielsweise Spiegel, Bildsensoren und dergleichen, von optischen Instrumenten müssen innerhalb des optischen Instruments exakt positioniert werden, um optische Strahlen zielgerichtet umlenken zu können bzw. im Falle der Bildsensoren die optischen Strahlen exakt aufnehmen zu können.

Das Justieren der innerhalb des optischen Instruments auf einem Träger angeordneten optischen Komponenten erfolgt in der Praxis mittels Justierschrauben, über die der mit der optischen Komponente ausgestattete Träger relativ zu einem anderen Bauteil des optischen Instruments ausgerichtet und fixiert wird. Das selbst bei Feingewinden vorhandene Spiel zwischen dem Außengewinde der Justierschraube und dem die Justierschraube aufnehmenden Innengewinde kann den Justiervorgang ungewollt beeinflussen. So treten beispielsweise bei iterativen Einstellschritten Hysteresen auf oder aber das Spiel begünstigt bei Erschütterungen im späteren Betrieb des optischen Instruments das Verlassen der zuvor eingestellten Justierposition.

Um ein solches ungewolltes Lösen der Justierstellung einer Justierschraube zu verhindern, ist es aus der DE 10 2016 102 469 B3 bekannt, eine Justierschraube mit einer die gesamte Länge der Justierschraube durchragenden Längsbohrung zum Einfüllen eines Klebstoffs zu versehen. Mittels des an der Schraubenspitze wieder aus der Justierschraube austretenden Klebstoffs wird die Justierschraube verdrehsicher mit dem einzustellenden Bauteil verklebt. Nachteilig an diesem bekannten Justiervorgang ist, dass einerseits die Justierschraube nur einmal verwendet werden kann, da die Längsbohrung mit dem Klebstoff verstopft ist und andererseits nach einem Lösen der Justierung die Klebstoffreste vor einer erneuten Einstellung erst aufwändig wieder entfernt werden müssen.

Aus der US2011/0185831A1 ist eine Anordnung zur Justage von optischen Trägern bekannt, die eine federelastische Innenhülse, eine Außenhülse und eine Innenschraube aufweist, welche die Innenhülse aufweitet.

Die US6,754,013B2 zeigt eine optische Montierung aus Metall mit zwei Abschnitten, die über ein Festkörpergelenk verbunden sind. Ein Schlitz zwischen den Abschnitten kann über eine quer verlaufende Schraube, die in einem Gewinde des einen Abschnitts steckt und mit ihrer Spitze an dem anderen Abschnitt anliegt, aufgeweitet werden.

Aus der US4,859,847 ist eine Halterung zur Montage und Justierung eines Photodetektors bekannt, mit einer gegenüber einer Basisplatte beweglichen Platte, deren Position über eine quer durch die bewegliche Platte und die Basisplatte verlaufende Schraube eingestellt werden kann.

Davon ausgehend liegt der Erfindung die **Aufgabe** zugrunde, eine Justiervorrichtung der eingangs genannten Art zu schaffen, die bei einfacher Handhabung eine sichere Justierung der optischen Komponenten innerhalb des optischen Instruments gewährleistet.

Die **Lösung** dieser Aufgabenstellung ist erfindungsgemäß dadurch gekennzeichnet, dass die zumindest abschnittweise mit einem Außengewinde ausgestattete Justierschraube im Querschnitt betrachtet in Radialrichtung federelastisch so ausgebildet ist, dass die Justierschraube mit ihrem Außengewinde klemmend in einem Innengewinde des Trägers oder des anderen Bauteils festlegbar ist und, dass die Justierschraube mit einer Schraubenspitze an dem anderen Bauteil oder dem Träger gelagert ist.

Die radiale Federelastizität der Justierschraube bewirkt ein zumindest abschnittweises Verklemmen des Außengewindes der Justierschraube mit dem die Justierschraube aufnehmenden Innengewinde, wodurch ein mögliches Spiel zwischen den beiden Gewinden vollständig kompensiert wird.

Gemäß einer bevorzugten Ausführungsform der Erfindung wird vorgeschlagen, dass in der Justierschraube zur Ausbildung der radialen Federelastizität mindestens ein vom Schraubenkopf ausgehender in Längsrichtung hin zur Schraubenspitze verlaufender und zumindest einseitig nach radial außen offener Schlitz ausgebildet ist.

Je nach Material der Justierschraube, bewirkt allein schon das Ausbilden des Längsschlitzes aufgrund der Eigenelastizität des Schraubenmaterials eine radiale Aufweitung der durch den Schlitz voneinander separierten Teile des Schraubenschaftes. Bei steiferen Materialien kann das radiale Aufweiten des Schlitzes auch ausschließlich oder unterstützend mechanisch, beispielsweise durch das Einsetzen und Verkanten eines Schraubendrehers, erfolgen. Beim Einschrauben einer mittels des Längsschlitzes modifizierten und radial erweiterten Justierschraube in das zugehörige Innengewinde liegt also immer eine Vorspannung vor, so dass ein anfänglich vorhandenes Gewindespiel vollständig kompensiert wird. Die Justierschraube kann aus Metall oder aus einem Kunststoffmaterial gefertigt sein. Die Schraube ist insbesondere einstückig ausgebildet.

Der Schlitz erstreckt sich in Längsrichtung von der Außenfläche des Schraubenkopfes hin zur Schraubenspitze. Der Schlitz durchdringt die Justierschraube nur abschnittsweise in Längsrichtung, die Justierschraube ist insbesondere im Bereich Ihrer Spitze geschlossen. Beispielsweise verläuft der Schlitz insbesondere mittig durch die Justierschraube in jenem Abschnitt, der das Außengewinde aufweist. Der Schlitz kann jedoch auch kürzer sein oder sich etwas über diesen Abschnitt hinaus zur Spitze hin erstrecken. Der Schlitz kann einen näherungsweise rechteckigen Querschnitt haben und über seine Länge vor dem Einschrauben einen gleichbleibenden Querschnitt haben. Alternativ kann sich der Schlitz zur Schraubenspitze hin verjüngen, der Querschnitt also kleiner werden.

Mit einer praktischen Ausführungsform der Erfindung wird vorgeschlagen, dass der mindestens eine Schlitz als gerader oder abgewinkelter Schlitz ausgebildet ist. Die genaue Form des Schlitzes hat keine wesentliche Auswirkung auf die radiale Federelastizität. Entscheidend ist die Ausbildung des Längsschlitzes und die Eigenelastizität des Schraubenmaterials, die die radiale Aufweitung bewirken.

Alternativ zur Ausbildung nur eines Schlitzes wird mit der Erfindung weiterhin vorgeschlagen, dass in der Justierschraube zwei sich kreuzende Schlitze ausgebildet sein können. Auch hier bewirkt die Separierung der Schaftteile der Justierschraube durch die beiden sich kreuzenden Schlitze das radiale Aufweiten des Durchmessers der Justierschraube, was beim Einschrauben in das Innengewinde die spielfreie Klemmung bewirkt.

Um ein Höchstmaß an radialer Federelastizität zu erhalten, wird mit einer bevorzugten Ausführungsform der Erfindung vorgeschlagen, dass der mindestens eine Schlitz an wenigstens zwei Seiten nach radial außen offen ausgebildet ist. Diese wenigstens beidseitige bzw. insbesondere allseitige radiale Öffnung des Schlitzes bzw. der Schlitze ermöglicht die volle Ausschöpfung der federelastischen Eigenschaften des Materials der Justierschraube. Der Schlitz durchdringt also beispielsweise an gegenüberliegenden Seiten die Außenwand der Justierschraube und zerteilt die Justierschraube damit in Längsrichtung in jenem Abschnitt, in dem der Schlitz verläuft.

Gemäß einer alternativen Ausführungsform der Erfindung wird die radiale Federelastizität der Justierschraube so ausgenutzt, dass der Schraubenschaft der Justierschraube im Bereich des Längsschlitzes radial nach innen zusammendrückbar ist. Hierzu wird erfindungsgemäß vorgeschlagen, dass der Durchmesser der Justierschraube im Bereich des mindestens einen Schlitzes größer ist als der Innendurchmesser des Innengewindes, in das die Justierschraube einschraubbar ist. Beim Einschrauben einer solchen, im Bereich des Schlitzes mit einem radialen Übermaß modifizierten und radial zusammendrückbaren Justierschraube in das zugehörige Innengewinde liegt also aufgrund der radialen Federelastizität immer eine Vorspannung vor, so dass ein anfänglich vorhandenes Gewindespiel vollständig kompensiert wird.

Bei Bedarf kann die Justierschraube zusätzlich durch Verklemmen, beispielweise durch dauerhaftes Einfügen eines passend dimensionierten Bauteils in den Schlitz der Justierschraube, in einer Justierposition fixiert werden. Dabei kann es sich um einen Stift oder eine weitere Schraube handeln, die in den Schlitz eingebracht werden. Es können andere Bauteile wie Unterlegscheiben vorgesehen sein, die durch Druck von oben auf die Justierschraube deren Aufweitung und Verklemmung im Gewinde des Trägers oder des anderen Bauteils bewirken.

Schließlich wird mit der Erfindung eine Vorrichtungsanordnung zur Justierung optischer Komponenten eines optischen Instruments mit einer mindestens eine Justierschraube aufweisenden Justiervorrichtung vorgeschlagen, wobei der Träger auf dem die optische Komponente angeordnet ist und das andere Bauteil des optischen Instruments, zu dem die optische Komponente in einer exakten Position fixierbar ist, relativ zueinander verschwenkbar angeordnet sind. Es handelt sich bei der Justiervorrichtung um eine wie vorstehend beschrieben ausgebildete Justiervorrichtung.

Die Vorrichtungsanordnung ermöglicht durch Ein- und Ausschrauben der Justierschraube den Winkel zwischen dem anderen Bauteil und dem dazu verschwenkbaren Träger exakt und spielfrei einzustellen.

Zur Ausbildung der Vorrichtungsanordnung wird erfindungsgemäß vorgeschlagen, dass der Träger und das andere Bauteil über eine Verbindungsschraube miteinander verbunden sind, wobei die Verbindungsschraube mit einem schraubenkopfseitigen Ende in einer Durchgangsbohrung im Träger oder dem anderen Bauteil gelagert ist und mit einem schraubenspitzenseitigen Ende in ein Innengewinde des anderen Bauteils oder des Trägers eingeschraubt ist und der Schraubenkopf der Verbindungsschraube sich über ein Federelement am Träger oder am anderen Bauteil abstützt und wobei die Justierschraube mit ihrem Außengewinde in ein Innengewinde im mit der Durchgangsbohrung für die Verbindungsschraube versehenen Bauteil des optischen Instruments, nämlich dem Träger oder dem anderen Bauteil, eingeschraubt ist und mit ihrer Schraubenspitze am anderen Bauteil oder dem Träger anliegt. Die Verbindungsschraube und die Justierschraube sind hierfür in Ihrer Länge jeweils passend dimensioniert.

Durch das koaxial auf der Verbindungsschraube angeordnete Federelement werden die relativ zueinander zu positionierenden Bauteile, nämlich der Träger der optischen Komponenten und das andere Bauteil, gegeneinander vorgespannt. Die Federkraft wirkt ebenso auf die Justierschraube, über die die beiden Bauteile aufeinander zu oder voneinander fort bewegbar sind.

Das Federelement ist insbesondere als Spiralfeder, Blattfeder oder als ein anderes federndes Bauteil ausgebildet, wie es Fachpersonen bekannt ist.

Weitere Merkmale und Vorteile der Erfindung ergeben sich anhand der zugehörigen Zeichnungen, in denen ein Ausführungsbeispiel einer Justiervorrichtung zur Justierung optischer Komponenten eines optischen Instruments nur beispielhaft dargestellt ist, ohne die Erfindung auf dieses Ausführungsbeispiel zu beschränken. In den Zeichnungen zeigt:
- Fig. 1: eine schematische Schnittdarstellung einer erfindungsgemäßen Vorrichtungsanordnung zur Justierung optischer Komponenten eines optischen Instruments;
- Fig. 2: einen schematischen Längsschnitt durch eine Justierschraube vor dem Einbau in eine Justiervorrichtung und
- Fig. 3: einen schematischen Längsschnitt, die Justierschraube gemäß Fig. 2 in einer in eine Justiervorrichtung eingeschraubten Position darstellend.

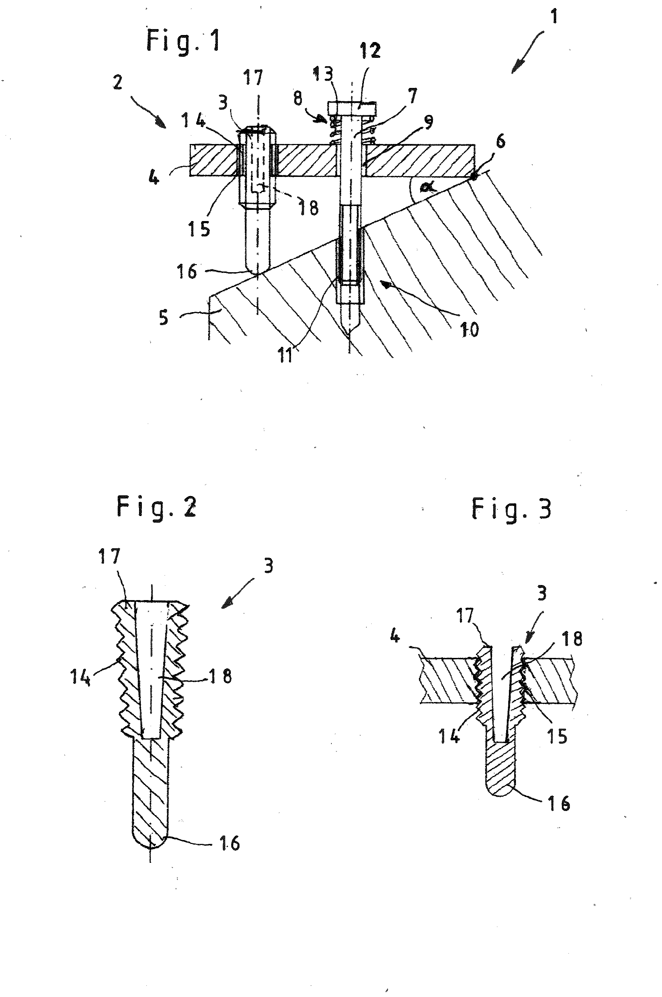

Die Abbildung Fig. 1 zeigt in einer Schnittdarstellung schematisch den Aufbau einer Vorrichtungsanordnung 1 zur Justierung optischer Komponenten eines optischen Instruments. Als wesentlichen Bestandteil umfasst die Vorrichtungsanordnung 1 eine Justiervorrichtung 2 mit mindestens einer Justierschraube 3.

Die optischen Komponenten, wie beispielsweise Spiegel oder Bildsensoren von optischen Instrumente müssen innerhalb des optischen Instruments exakt positioniert werden, um optische Strahlen zielgerichtet umlenken zu können bzw. im Falle der Bildsensoren die optischen Strahlen exakt aufnehmen zu können.

Das Justieren der innerhalb des optischen Instruments auf einem Träger 4 angeordneten optischen Komponenten erfolgt mittels Justierschrauben 3, über die der mit der optischen Komponente ausgestattete Träger 4 relativ zu einem anderen Bauteil 5 des optischen Instruments ausgerichtet und fixiert wird. Bei diesem Anderen Bauteil 5, zu dem der mit der optischen Komponente ausgestattete Träger 4 ausgerichtet werden muss, kann es sich beispielsweise um einen Grundkörper des optischen Instruments handeln.

Wie aus Fig. 1 ersichtlich, sind der mit der optischen Komponente versehene Träger 4 und das andere Bauteil 5, zu dem der Träger 4 und somit auch die optische Komponente in einer exakten Position eingestellt und fixiert werden müssen, um eine Schwenkachse 6 verschwenkbar aneinandergelagert, wodurch sich zwischen den beiden zueinander verschwenkbaren Bauteilen, dem Träger 4 und dem anderen Bauteil 5, ein Verschwenkwinkel α aufspannt.

Bei der in Fig. 1 dargestellten Ausführungsform der Vorrichtungsanordnung 1 sind der Träger 4 und das andere Bauteil 5 über eine Verbindungsschraube 7 miteinander verbunden, wobei die Verbindungsschraube 7 mit einem schraubenkopfseitigen Ende 8 in einer Durchgangsbohrung 9 im Träger 4 gelagert ist und mit einem schraubenspitzenseitigen Ende 10 in ein Innengewinde 11 des anderen Bauteils 5 eingeschraubt ist.

Wie weiterhin ersichtlich, stützt sich der Schraubenkopf 12 der Verbindungsschraube 7 über ein Federelement 13 am Träger 4 ab, wobei das Federelement 13 koaxial auf dem Schaft der Verbindungsschraube 7 angeordnet ist.

Die zum Einstellen des Verschwenkwinkels α dienende Justierschraube 3 ist mit ihrem Außengewinde 14 in ein Innengewinde 15 im mit der Durchgangsbohrung 9 für die Verbindungsschraube 7 versehenen Bauteil des optischen Instruments, nämlich dem Träger 4, eingeschraubt und liegt mit ihrer Schraubenspitze 16 am als Widerlager fungierenden anderen Bauteil 5 an.

Durch das koaxial auf der Verbindungsschraube 7 angeordnete Federelement 13 werden die relativ zueinander zu positionierenden Bauteile, nämlich der Träger 4 der optischen Komponenten und das andere Bauteil 5, gegeneinander vorgespannt. Die Federkraft des Federelements 13 wirkt ebenso auf die Justierschraube 3, über die die beiden Bauteile 4 und 5 zur Einstellung des gewünschten Verschwenkwinkels α aufeinander zu oder voneinander fort bewegbar sind.

Zur Kompensation eines Gewindespiels zwischen dem Außengewinde 14 der Justierschraube 3 und dem Innengewinde 15, in das die Justierschraube 3 eingeschraubt wird, ist, wie insbesondere aus Fig. 2 und 3 ersichtlich, in der Justierschraube 3 ein vom Schraubenkopf 17 ausgehender und in Längsrichtung hin zur Schraubenspitze 16 verlaufender und zumindest einseitig nach radial außen offener Schlitz 18 ausgebildet.

Je nach Material der Justierschraube 3 bewirkt allein schon das Ausbilden des Schlitzes 18 aufgrund der Eigenelastizität des Schraubenmaterials eine radiale Aufweitung der durch den Schlitz18 voneinander separierten Teile des Schraubenschaftes. Bei steiferen Materialien kann das radiale Aufweiten des Schlitzes 17 auch ausschließlich oder unterstützend mechanisch, beispielsweise durch das Einsetzen und Verkanten eines Schraubendrehers, erfolgen.

Beim Einschrauben einer mittels des längs verlaufenden Schlitzes18 modifizierten und radial erweiterten Justierschraube 3 in das zugehörige Innengewinde 15 liegt also immer eine Vorspannung zwischen dem Außengewinde 14 der Justierschraube 3 und dem zughörigen Innengewinde 15 vor, so dass ein anfänglich vorhandenes Gewindespiel vollständig kompensiert wird.

Die Länge des vom Schraubenkopf 17 ausgehenden Schlitzes 18 ist so auszubilden, dass eine ausreichende radiale Federelastizität der Justierschraube 3 im Bereich des Schlitzes 18 gegeben ist, um eine sichere und dauerhafte Klemmung des Außengewindes 14 der Justierschraube 3 in dem Innengewinde 15 zu gewährleisten. Die Länge des Innengewindes 15, in das die Justierschraube 3 eingeschraubt wird, kann ein Maß für die Ausbildung der Länge des in der Justierschraube 3 auszubildenden Schlitzes 18 sein.

Da der Träger 4 und das andere Bauteil 5 über das auf der Verbindungsschraube 7 angeordnete Federelement 7 aufeinander zu federbelastet sind und sich andererseits die in den Träger 4 eingeschraubte Justierschraube 3 mit ihrer Schraubenspitze 16 am anderen Bauteil 5 als Widerlager abstützt, lässt sich der Verschwenkwinkel α sehr genau durch ein Drehen der Justierschraube 3 einstellen und aufgrund der durch den Schlitz 18 hervorgerufenen radialen Federelastizität der Justierschraube 3 auch sicher und spielfrei in der gewünschten Position fixieren.

Die in Fig. 1 dargestellte Anordnung der Verbindungsschraube 7 und der Justierschraube 3 ist nur beispielhaft dargestellt. Die Vorrichtungsanordnung 1 kann selbstverständlich auch so ausgebildet sein, dass der Träger 4 und das andere Bauteil 5 über eine Verbindungsschraube 7 miteinander verbunden, wobei die Verbindungsschraube 7 mit einem schraubenkopfseitigen Ende 8 in einer Durchgangsbohrung 9 im anderen Bauteil 5 gelagert ist und mit einem schraubenspitzenseitigen Ende 10 in ein Innengewinde 11 des Trägers 4 eingeschraubt ist. Bei dieser alternativen Anordnungsform stützt sich der Schraubenkopf 12 der Verbindungsschraube 7 sich über ein Federelement 13 am anderen Bauteil 5 ab.

Die zum Einstellen des Verschwenkwinkels α dienende Justierschraube 3 ist bei dieser alternativen Anordnungsform mit ihrem Außengewinde 14 in ein Innengewinde 15 im mit der Durchgangsbohrung 9 für die Verbindungsschraube 7 versehenen anderen Bauteil 5 eingeschraubt und liegt mit ihrer Schraubenspitze 16 am als Widerlager fungierenden Träger 4 an.

Der in der Justierschraube 3 ausgebildete mindestens eine Schlitz 18 kann als gerader oder abgewinkelter Schlitz ausgebildet sein. Die Form des Schlitzes 18 hat keine wesentliche Auswirkung auf die radiale Federelastizität. Entscheidend ist, dass durch die Ausbildung des Schlitzes 18 eine radiale Federelastizität der Justierschraube 3 erreichbar ist.

Alternativ zur Ausbildung nur eines Schlitzes 18 ist es auch möglich, in der Justierschraube 3 zwei sich kreuzende Schlitze 18 auszubilden. Auch hier bewirkt die Separierung der Schaftteile der Justierschraube 3 durch die beiden sich kreuzenden Schlitze 18 das radiale Aufweiten des Durchmessers der Justierschraube 3, was beim Einschrauben in das Innengewinde 15 die spielfreie Klemmung bewirkt.

Um ein Höchstmaß an radialer Federelastizität zu erhalten, ist der in der Justierschraube 3 ausgebildete mindestens eine Schlitz 18 an wenigstens zwei Seiten nach radial außen offen ausgebildet ist. Diese wenigstens beidseitige bzw. insbesondere allseitige radiale Öffnung des Schlitzes 18 bzw. der Schlitze 18 ermöglicht die volle Ausschöpfung der federelastischen Eigenschaften des Materials der Justierschraube 3.

Gemäß einer alternativen Ausführungsform kann die durch den mindestens einen Schlitz 18 hervorgerufenen radiale Federelastizität der Justierschraube 3 auch so ausgenutzt werden, dass der Schraubenschaft der Justierschraube 3 im Bereich des Schlitzes 18 radial nach innen zusammendrückbar ist.

Bei dieser Ausgestaltungsform ist der Durchmesser der Justierschraube 3 im Bereich des mindestens einen Schlitzes 18 größer als der Innendurchmesser des Innengewindes 15, in das die Justierschraube 3 einzuschrauben ist. Beim Einschrauben einer solchen, im Bereich des Schlitzes 18 mit einem radialen Übermaß modifizierten und radial zusammendrückbaren Justierschraube 3 in das zugehörige Innengewinde 15 liegt aufgrund der radialen Federelastizität ebenfalls immer eine Vorspannung vor, so dass ein anfänglich vorhandenes Gewindespiel vollständig kompensiert wird.

Da das wesentliche Element der Justiervorrichtung 2 die radial federelastische Justierschraube 3 ist, die aufgrund der radialen Federelastizität ein sicheres und spielfreies Verklemmen der Justierschraube 3 in dem zugehörigen Innengewinde 15 gewährleistet, ist es gemäß einer alternativen Ausführungsform auch möglich, die Verbindung zwischen den beiden relativ zueinander einzustellen Bauteilen, nämlich dem die optische Komponente aufweisenden Träger 4 und dem anderen Bauteil 5 des optischen Instruments, nur mittels der Justierschraube 3 vorzunehmen, also ohne die in Fig. 1 dargestellte Verbindungsschraube 7.

Bei dieser alternativen Ausgestaltungform der Justiervorrichtung 2 ist es erforderlich, dass die Justierschraube 3 einerseits mittels der radialen Federelastizität klemmend im Träger 4 oder dem anderen Bauteil 5 festlegbar ist, während die Justierschraube 3 mit ihrer Schraubenspitze 16 so mit dem das Widerlager bildenden anderen Bauteil 5 oder Träger 4 verbunden ist, dass die Justierschraube 3 in Längsrichtung der Justierschraube 3 betrachtet starr mit diesem das Widerlager bildenden Bauteil verbunden ist, diese Lagerung aber gleichzeitig eine Rotation der Justierschraube 3 um ihre Längsachse ermöglicht, um den gewünschten Verschwenkwinkel α einstellen zu können.

Bei dieser Ausführungsform ist die Justierschraube 3 beispielsweise mit zwei in Längsrichtung der Justierschraube 3 räumlich voneinander beabstandeten Außengewinden 14 versehen, nämlich einem im Bereich des Schraubenkopfes 17 zum klemmenden Festlegen im Innengewinde 15 und einem im Bereich der Schraubenspitze 16 zum Einschrauben in eine Gewindebuchse im das Widerlager bildenden Bauteil. Diese Gewindebuchse muss dann ihrerseits drehbar in dem zugehörigen Bauteil gelagert sein.

Alternativ könnte im Bereich der Schwenkachse 6 zwischen dem anderen Bauteil 5 und dem Träger 4 ein Federelement vorgesehen sein, dass den Träger 4 in Richtung des Bauteils 5 vorspannt.

Eine wie zuvor beschrieben ausgebildete Justiervorrichtung 2 bzw. Vorrichtungsanordnung 1 zeichnet sich dadurch aus, dass aufgrund der radialen Federelastizität der Justierschraube 3 eine dauerhaft positionsgenaue und spielfreie Einstellung der zu justierenden optischen Komponenten gewährleistet ist.

### Bezugszeichenliste

- 1: Vorrichtungsanordnung
- 2: Justiervorrichtung
- 3: Justierschraube
- 4: Träger
- 5: anderes Bauteil
- 6: Schwenkachse
- 7: Verbindungsschraube
- 8: schraubenkopfseitiges Ende
- 9: Durchgangsbohrung
- 10: schraubenspitzenseitiges Ende
- 11: Innengewinde
- 12: Schraubenkopf (Verbindungsschraube)
- 13: Federelement
- 14: Außengewinde
- 15: Innengewinde
- 16: Schraubenspitze (Justierschraube)
- 17: Schraubenkopf (Justierschraube)
- 18: Schlitz

- α: Verschwenkwinkel

## Patentansprüche

1. Justiervorrichtung (2) zur Justierung optischer Komponenten eines optischen Instruments, mit mindestens einer Justierschraube (3), über die die auf einem Träger (4) angeordnete optische Komponente relativ zu einem anderen Bauteil (5) des optischen Instruments in einer exakten Position fixierbar ist, **dadurch gekennzeichnet,**
**dass** die zumindest abschnittweise mit einem Außengewinde (14) ausgestattete Justierschraube (3) im Querschnitt betrachtet in Radialrichtung federelastisch so ausgebildet ist, dass die Justierschraube (3) mit ihrem Außengewinde (14) klemmend in einem Innengewinde (15) des Trägers (4) oder des anderen Bauteils (5) festlegbar ist und, dass die Justierschraube (3) mit einer Schraubenspitze (16) an dem anderen Bauteil (5) oder dem Träger (4) gelagert ist.

2. Justiervorrichtung (2) nach Anspruch 1, **dadurch gekennzeichnet, dass** in der Justierschraube (3) zur Ausbildung der radialen Federelastizität mindestens ein vom Schraubenkopf (17) ausgehender in Längsrichtung hin zur Schraubenspitze (16) verlaufender und zumindest einseitig nach radial außen offener Schlitz (18) ausgebildet ist.

3. Justiervorrichtung (2) nach Anspruch 2, **dadurch gekennzeichnet, dass** der mindestens eine Schlitz (18) als gerader oder abgewinkelter Schlitz (18) ausgebildet ist.

4. Justiervorrichtung (2) nach einem der Ansprüche 2 oder 3, **dadurch gekennzeichnet, dass** in der Justierschraube (3) zwei sich kreuzende Schlitze (18) ausgebildet sind.

5. Justiervorrichtung (2) nach einem der Ansprüche 2 bis 4, **dadurch gekennzeichnet, dass** der mindestens eine Schlitz (18) an wenigstens zwei Seiten nach radial außen offen ausgebildet ist.

6. Justiervorrichtung (2) nach einem der Ansprüche 2 bis 5, **dadurch gekennzeichnet, dass** der Durchmesser der Justierschraube (3) im Bereich des mindestens einen Schlitzes (18) größer ist als der Innendurchmesser des Innengewindes (15), in das die Justierschraube (3) einschraubbar ist.

7. Vorrichtungsanordnung (1) zur Justierung optischer Komponenten eines optischen Instruments mit einer mindestens eine Justierschraube (3) aufweisenden Justiervorrichtung (2) nach einem der Ansprüche 1 bis 6, wobei der Träger (4) auf dem die optische Komponente angeordnet ist und das andere Bauteil (5) des optischen Instruments, zu dem die optische Komponente in einer exakten Position fixierbar ist, relativ zueinander verschwenkbar angeordnet sind,
**dadurch gekennzeichnet,**
**dass** der Träger (4) und das andere Bauteil (5) über eine Verbindungsschraube (7) miteinander verbunden sind, wobei die Verbindungsschraube (7) mit einem schraubenkopfseitigen Ende (8) in einer Durchgangsbohrung (9) im Träger (4) oder dem anderen Bauteil (5) gelagert ist und mit einem schraubenspitzenseitigen Ende (10) in ein Innengewinde (11) des anderen Bauteils (5) oder des Trägers (4) eingeschraubt ist und der Schraubenkopf (12) der Verbindungsschraube (7) sich über ein Federelement (13) am Träger (4) oder am anderen Bauteil (5) abstützt und, wobei die Justierschraube (3) mit ihrem Außengewinde (14) in ein Innengewinde (15) im mit der Durchgangsbohrung (9) für die Verbindungsschraube (7) versehenen Bauteil des optischen Instruments, nämlich dem Träger (4) oder dem anderen Bauteil (5), eingeschraubt ist und mit ihrer Schraubenspitze (16) am anderen Bauteil (5) oder dem Träger (4) anliegt.

## Claims

1. An adjustment device (2) for adjusting optical components of an optical instrument, having at least one adjustment screw (3), via which the optical component arranged on a carrier (4) can be fixed in an exact position relative to another component (5) of the optical instrument, **characterised in,**
**that** the adjustment screw (3), which is provided at least in sections with an external thread (14), is designed to have spring elasticity in the radial direction when viewed in cross-section such that the adjustment screw (3) can be fixed by being clamped with its external thread (14) in an internal thread (15) of the carrier (4) or of the other component (5), and in that the adjustment screw (3) is mounted with a screw tip (16) on the other component (5) or the carrier (4).

2. The adjustment device (2) according to claim 1, **characterised in that** at least one slit (18) running from the screw head (17) in the longitudinal direction towards the screw tip (16) and open radially outwards on at least one side is formed in the adjustment screw (3) to form the radial spring elasticity.

3. The adjustment device (2) according to claim 2, **characterised in that** the at least one slit (18) is designed as a straight or angled slit (18).

4. The adjustment device (2) according to one of claims 2 or 3, **characterised in that** two intersecting slits (18) are formed in the adjustment screw (3).

5. The adjustment device (2) according to one of claims 2 to 4, **characterised in that** the at least one slit (18) is open radially outwards on at least two sides.

6. The adjustment device (2) according to one of claims 2 to 5, **characterised in that** the diameter of the adjustment screw (3) in the region of the at least one slit (18) is larger than the internal diameter of the internal thread (15) into which the adjustment screw (3) can be screwed.

7. A device arrangement (1) for adjusting optical components of an optical instrument with an adjustment device (2) having at least one adjustment screw (3) according to one of claims 1 to 6, wherein the carrier (4) on which the optical component is arranged and the other component (5) of the optical instrument, to which the optical component can be fixed in an exact position, are arranged so as to be pivotable relative to one another,
**characterised in**
**that** the carrier (4) and the other component (5) are connected to one another via a connecting screw (7), wherein the connecting screw (7) is mounted with a screw head-side end (8) in a through-hole (9) in the carrier (4) or the other component (5) and is screwed with a screw tip-side end (10) into an internal thread (11) of the other component (5) or the carrier (4) and the screw head (12) of the connecting screw (7) is supported on the carrier (4) or on the other component (5) via a spring element (13) and, wherein the adjustment screw (3) is screwed with its external thread (14) into an internal thread (15) in the component of the optical instrument provided with the through-hole (9) for the connecting screw (7), namely the carrier (4) or the other component (5), and bears with its screw tip (16) against the other component (5) or the carrier (4).

## Revendications

1. Dispositif d'ajustement (2) pour l'ajustement de composants optiques d'un instrument optique, comportant au moins une vis d'ajustement (3), par l'intermédiaire de laquelle le composant optique agencé sur un support (4) peut être fixé dans une position exacte par rapport à un autre organe (5) de l'instrument optique, **caractérisé,**
**en ce que** la vis d'ajustement (3), équipée au moins par sections d'un filetage extérieur (14), est formée de manière élastique en section transversale, vue dans la direction radiale, de telle sorte que la vis d'ajustement (3) peut être fixée par son filetage extérieur (14) par serrage dans un filetage intérieur (15) du support (4) ou de l'autre organe (5), et **en ce que** la vis d'ajustement (3) est montée par une pointe de vis (16) sur l'autre organe (5) ou le support (4).

2. Dispositif d'ajustement (2) selon la revendication 1, **caractérisé en ce qu'**au moins une fente (18) partant de la tête de vis (17), s'étendant dans la direction longitudinale vers la pointe de vis (16) et ouverte au moins d'un côté radialement vers l'extérieur, est formée dans la vis d'ajustement (3) pour former l'élasticité élastique radiale.

3. Dispositif d'ajustement (2) selon la revendication 2, **caractérisé en ce que** l'au moins une fente (18) est formée comme une fente (18) droite ou coudée.

4. Dispositif d'ajustement (2) selon l'une des revendications 2 ou 3, **caractérisé en ce que** deux fentes (18) se croisant sont formées dans la vis d'ajustement (3).

5. Dispositif d'ajustement (2) selon l'une des revendications 2 à 4, **caractérisé en ce que** l'au moins une fente (18) est formée ouverte radialement vers l'extérieur sur au moins deux côtés.

6. Dispositif d'ajustement (2) selon l'une des revendications 2 à 5, **caractérisé en ce que** le diamètre de la vis d'ajustement (3) dans la zone de l'au moins une fente (18) est supérieur au diamètre intérieur du filetage intérieur (15) dans lequel la vis d'ajustement (3) peut être vissée.

7. Ensemble dispositif (1) pour l'ajustement de composants optiques d'un instrument optique comportant un dispositif d'ajustement (2) présentant au moins une vis d'ajustement (3) selon l'une des revendications 1 à 6, dans lequel le support (4) sur lequel est agencé le composant optique et l'autre organe (5) de l'instrument optique, par rapport auquel le composant optique peut être fixé dans une position exacte, sont agencés de manière à pouvoir pivoter l'un par rapport à l'autre,
**caractérisé,**
**en ce que** le support (4) et l'autre organe (5) sont reliés entre eux par l'intermédiaire d'une vis de liaison (7), dans lequel la vis de liaison (7) est montée avec une extrémité (8) côté tête de vis dans un trou de passage (9) dans le support (4) ou l'autre organe (5) et est vissée avec une extrémité (10) côté pointe de vis dans un filetage intérieur (11) de l'autre organe (5) ou du support (4) et la tête de vis (12) de la vis de liaison (7) s'appuie sur le support (4) ou sur l'autre organe (5) par l'intermédiaire d'un élément à ressort (13) et, dans lequel la vis d'ajustement (3) est vissée par son filetage extérieur (14) dans un filetage intérieur (15) dans l'organe de l'instrument optique pourvu du trou de passage (9) pour la vis de liaison (7), à savoir le support (4) ou l'autre organe (5), et s'applique par sa pointe de vis (16) contre l'autre organe (5) ou le support (4).
